Europäisches Patentamt

European Patent Office

Office européen des brevets

(19)

(11) Publication number: **0 059 329**
A2

# (12) EUROPEAN PATENT APPLICATION

(21) Application number: **82100787.9**

(22) Date of filing: **04.02.82**

(51) Int. Cl.³: **A 23 G 9/08**
**A 23 G 9/30**

(30) Priority: **27.02.81 IT 1245081**

(43) Date of publication of application:
**08.09.82 Bulletin 82/36**

(84) Designated Contracting States:
**AT BE CH DE FR GB LI LU NL SE**

(71) Applicant: **Carpigiani Bruto Macchine Automatiche S.p.A.**
**45, Via Emilia**
**I-40011 Anzola Emilia, Bologna(IT)**

(72) Inventor: **Manfroni, Ezio**
**56, Via Altopiano**
**I-40037 Sasso Marconi(IT)**

(74) Representative: **Porsia, Attilio et al,**
**c/o Succ. Ing. Fischetti & Weber Via Caffaro 3**
**I-16124 Genova(IT)**

(54) Batch-operating machine for making ice cream, with pasteurizing tank for the batch of liquid mixture.

(57) Machine for making ice-cream, with batch operation, comprising a freezing cylinder provided with stirring means, and a tank containing the batch of ice-cream liquid mixture to be fed into the freezing cylinder.

The freezing cylinder is in heat-exchange relationship with the evaporator of a refrigerating unit, whereas at least a first portion of the condenser of said unit is in heat-exchange contact with the tank for containing the liquid mixture. Thus, while a normal freezing cycle occurs in said freezing cylinder, the gas delivered from the compressor of the refrigerating unit will effect, in the liquid mixture tank, the first step of the pasteurizing step of the liquid mixture, that is the heating of this mixture. The second step of the pasteurizing cycle, that is the cooling, will occur successively within the same cylinder where the freezing of the liquid mixture will occur.

## Batch-operating machine for making ice-cream, with pasteurizing tank for the batch of liquid mixture.

This invention relates to the ice-cream making machines, and particularly the batch-operating ice-cream making machines.

The batch-operating ice-cream making machines comprise a freezing cylinder provided with a mechanical stirrer acting also as an ejector of the produced ice-cream batch. This cylinder is surrounded by, and is in heat-exchange relationship with, the evaporator of a refrigerating unit. This refrigerating unit comprises, conventionally, also a motor-compressor, and a condenser for dissipating the heat from the compressed gas delivered by the compressor, before feeding it through the usual expansion valve to the evaporator of the unit.

These batch-operating machines are usually coupled to a pasteurizer provided with heating elements to heat the ice-cream liquid mixture to a bacteria-killing temperature (about 70°C), and provided also with a refrigerating unit for cooling the so-heated liquid mixture, so as to complete the pasteurizing cycle.

In some of these machines, the pasteurizer is coupled directly to the freezing cylinder and is in the form of a tank for containing the batch of ice-cream mixture to be fed to the freezing cylinder. In this instance, the tank for containing the liquid mixture is provided, similarly to a pasteurizer, with heating means (usually electric resistances) and with cooling means.

The object of this invention is to provide a batch--coperating ice-cream making machine, wherein at least the initial portion of the condenser of the refrigerating unit is in heat-exchange relationship with the pasteurizing tank coupled to said machine.

Advantageously, the pasteurizing tank is mounted on the top of the freezing cylinder of the ice-cream making machine so as to transfer the liquid mixture directly into said cylinder by gravity.

By virtue of this arrangement, the heat produced by the compression of the refrigerant gas will not be dissipated and lost and can be utilized to heat the ice--cream liquid mixture to a bacteria-killing temperature, which will take place simultaneously with the freezing of the ice-cream in the freezing cylinder, whereby as soon as this cylinder will be emptied, the heated liquid mixture in the pasteurizing tank can be transferred directly into the freezing cylinder, where it will be subjected first to a cooling action, thus completing the pasteurizing cycle, and then to a freezing action such as to turn into ice-cream. In the meantime, a new batch of liquid mixture is heated in the pasteurizing tank.

Thus, by the use of a normal refrigerating unit of an ice-cream making machine, it is possible to obtain the heating of a batch of liquid mixture and simultaneous cooling and successive freezing of a previous batch of liquid mixture, without any additional energy consumption than that required usually to freeze a similar batch of mixture.

Moreover, a machine can be constructed comprising in combination a pasteurizing tank and a freezing cylinder, which will be much more compact and less expensive that the conventional machines, eliminating all the double circuits for cooling and heating operations.

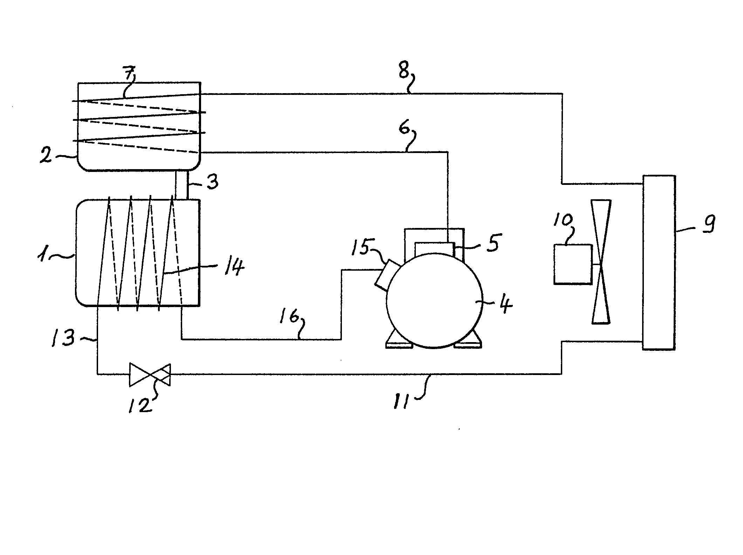

Further features and advantages of the present invention will be more apparent in the following description of a preferred embodiment thereof, made with reference to the accompanying drawing showing diagrammatically the circuit of a machine according to the invention.

With reference to the drawing, the numeral 1 indicates the freezing cylinder of a batch-operating ice--cream making machine, and the numeral 2 indicates the superimposed tank containing the batch of liquid mixture. The tank 2 communicates with the cylinder 1 through a pipe 3 having interposed therein a suitable shut-off valve (not shown).

The numeral 4 indicates the motor-compressor of the refrigerating unit. The delivery 5 of this compressor is connected, through a pipe 6, with the initial portion of condenser 7, in heat-exchange relationship with the tank 2.

The condenser 7 communicates, through a pipe 8, with a second portion of condenser 9 which is air-cooled by an electrically-operated fan 10. The fluid refrigerant from condenser 9 flows, through the pipe 11, expansion valve 12 and pipe 13 into the evaporator 14 which is in heat--exchange relationship with the freezing cylinder 1, and thence it flows back to the suction 15 of the compressor 4, through the pipe 16.

The operation of the machine is now apparent. Assuming the compressor 4 is operating, while the fluid refrigerant expands in the evaporator 14 and cools the ice--cream mixture in the freezing tank 1, the compressed fluid refrigerant in the condenser 7 simultaneously effects the heating of the liquid mixture in the tank 2. The condenser portion 9 serves to dissipate any residual heat in the fluid refrigerant coming from the condenser portion 7, particularly upon approaching the end of the cycle, that is when the mixture 2 has already reached a certain temperature, whereby the amount of heat subtracted from the fluid refrigerant in the condenser portion 7 is not as great as at the beginning of the cycle.

Upon completion of the freezing cycle in the cylinder 1, and after this cylinder has been emptied, the hot mixture flows from the tank 2 into the cylinder 1, while a new batch of liquid mixture is charged into the tank 2 and the cycle is repeated. The mixture in the cylinder 1 is first cooled, thus completing the pasteurization cycle and is then frozen and turned into ice-cream. Simultaneously, the liquid mixture in the tank 2 is heated up to a pasteurization temperature.

The advantages of the cycle according to the invention are apparent. Besides a considerable energy saving and simplification of the electrical circuitry, the important advantage is obtained of providing a very compact and easily serviceable pasteurizing-freezing apparatus.

Obviously, the present invention is not limited to the embodiment here shown and described, but includes all changes and modifications within the broadest scope of the inventive principle, substantially as claimed hereinafter.

## CLAIMS

1. A batch-operating ice-cream making machine comprising a freezing cylinder, a tank for pasteurizing a batch of liquid mixture to be fed to said cylinder, and a gas-compression refrigerating unit, characterized in that said freezing cylinder is in heat-exchange relationship with the evaporator of said refrigerating unit, and said pasteurizing tank is in heat-exchange relationship with at least a portion of the condenser of said refrigerating unit.

2. A machine according to the preceding claim, wherein the condenser of said refrigerating unit comprises a first section in heat-exchange relationship with said pasteurizing tank, and a second section co-operating with means for dissipating any residual heat.

3. A machine according to the preceding claims, wherein said pasteurizing tank is mounted above said freezing cylinder, said tank and cylinder being contained within the same frame of the machine, means being provided to transfer the batch of the heated liquid mixture from the tank into the cylinder.

4. A machine according to the preceding claims, wherein the cooling and subsequent freezing of a batch of liquid mixture in the freezing cylinder, and the heating of a second batch of liquid mixture in the pasteurizing tank occur at the same time, due to the action, respecti-

- 2 -                              0059329

vely, of the fluid refrigerant expansion in the evaporator of a gas-compression refrigerating circuit, and of the compression of the same fluid in the condenser of said refrigerating circuit, said evaporator being in heat-exchange relationship with the freezing cylinder of said machine, and said condenser is at least partially in heat-exchange relationship with said pasteurizing tank.

5. A machine according to any one of the preceding claims, substantially as described, as shown and for the specified purposes.